# FASCICULE DE BREVET EUROPEEN

(11) **EP 3 542 335 B1**
(45) Date de publication et mention de la délivrance du brevet: **23.06.2021**
(21) Numéro de dépôt: 17801672.1
(22) Date de dépôt: 15.11.2017
(51) Int. Cl.: G06Q 20/32, G06Q 20/34, G07F 7/08, G07F 7/10

(54) **PROCÉDÉ DE TRAITEMENT DE DONNÉES TRANSACTIONNELLES, TERMINAL DE COMMUNICATION, LECTEUR DE CARTES ET PROGRAMME CORRESPONDANT**
VERFAHREN ZUR VERARBEITUNG VON TRANSAKTIONSDATEN, ENTSPRECHENDES KOMMUNIKATIONSENDGERÄT, KARTENLESER UND PROGRAMM
METHOD FOR PROCESSING TRANSACTION DATA, CORRESPONDING COMMUNICATION TERMINAL, CARD READER AND PROGRAM

(30) Priorité: 15.11.2016 FR 1661071
(43) Date de publication de la demande: 25.09.2019
(73) Titulaire: Ingenico Group, 75015 Paris (FR)
(72) Inventeur: QUENTIN, Pierre, 95880 Enghien les Bains (FR); ROTSAERT, Christopher, 59290 Wasquehal (FR)
(74) Mandataire: Vidon Brevets & Stratégie
(86) Numéro de dépôt international: PCT/EP2017/079338
(87) Numéro de publication internationale: WO 2018/091538

(56) Documents cités:
- WO-A2-2014/013252
- US-A1- 2016 125 181
- US-B2- 9 324 100

## Description

### 1. Domaine

L'invention se rapporte au traitement de données transactionnelles. L'invention se rapporte plus particulièrement au traitement de données transactionnelles, données qui sont mises en œuvre dans le cadre d'une opération de paiement. L'invention se rapporte encore plus particulièrement au traitement de données transactionnelles dans le cadre d'une transaction de paiement menée conjointement par un terminal de communication et par un terminal de paiement connecté au terminal de communication.

### 2. Art antérieur

Le paiement en situation de mobilité est un enjeu majeur de développement économique. Pour cette raison, de nombreux industriels proposent des solutions de paiement en mobilité qui sont supposées faciliter la vie de l'utilisateur. Par exemple, de nombreuses solutions existent pour permettre à l'utilisateur d'effectuer des paiements avec son smartphone. Ces solutions sont principalement de deux types : le premier est de permettre au smartphone de réaliser un paiement en ligne, via une application dédiée (ou non) et pour acheter un bien ou un service accessible lui-même par l'intermédiaire d'une application en ligne. Ces solutions se rapprochent, dans leur esprit, des solutions de paiement par carte bancaire accessibles en ligne à partir d'un ordinateur personnel et d'un navigateur internet. De nombreuses solutions de traitement de transactions de paiement ont été proposées dans ce cas de figure.

Le deuxième type se rapporte au paiement, au sein d'un commerce physique, avec son smartphone : à l'aide d'une application dédiée, le smartphone simule le fonctionnement d'une carte bancaire, souvent une carte bancaire sans contact. À nouveau, on ne manque pas de solutions pour effectuer ce type de simulation et de paiement.

En revanche, il existe une problématique quelque peu différente, dans laquelle le commerçant lui-même est en situation de mobilité, ou à tout le moins, une situation dans laquelle le commerçant ne dispose pas de terminal de paiement. Une telle situation se rencontre par exemple pour les commerçants ou les professionnels qui sont en déplacement constant pour leur activité professionnelle : médecins de campagne, professionnels libéraux, chauffeurs privés. Ces professionnels, que nous appelons par extension commerçants, ont besoin de recevoir des paiements de la part de leurs clients mais n'ont pas nécessairement la volonté ou la possibilité de s'équiper d'un terminal de paiement autonome pour recevoir des paiements (par exemple à cause du prix de tels terminaux). Pour cette raison, des solutions alternatives ont été développées. C'est par exemple le cas des solutions proposées par la société Square™. Il est ainsi proposé un lecteur de cartes bancaire qui vient se brancher sur la prise jack d'un terminal de communications. Un tel lecteur de cartes bancaire est par exemple présenté dans le document de brevet US9324100.

Il est plus particulièrement décrit un lecteur de cartes est positionné dans un boîtier de faibles dimensions. Une tête de lecture magnétique est configurée pour être couplée à un dispositif mobile et le lecteur de cartes dispose d'une fente pour balayer une bande magnétique d'une carte. La tête de lecture lit les données sur la bande magnétique et produit un signal indicatif des données stockées sur la bande magnétique. Une prise de sortie (de type jack) est adaptée pour être insérée dans un port du dispositif mobile et délivrer un signal de sortie au dispositif mobile.

Le document de brevet US20160203466 décrit pour sa part une méthode consistant à transmettre des informations avec un protocole de communication à un dispositif mobile à l'aide d'un lecteur de cartes muni d'une tête de lecture qui comporte une fente pour balayer une bande magnétique d'une carte, une prise de sortie et un dispositif électronique qui comprend un microcontrôleur. La tête de lecture est utilisée pour lire les données sur une bande magnétique d'une carte. Un signal magnétique brut est produit représentant des données stockées sur la bande magnétique. Le signal de tête magnétique brute est converti en un signal numérique traité que le microcontrôleur peut interpréter. Un flux synchrone de type Manchester est produit et transmis au terminal de communication par l'intermédiaire de la prise jack.

D'autres solutions de ce type existent également, notamment pour permettre l'utilisation d'une carte à puce à la place (ou en plus) d'une carte à bande magnétique. Par ailleurs, d'autres solutions de ce type ne nécessitent pas de connexion physique entre le terminal de communication et le lecteur de cartes : une connexion sans fil (de type Bluetooth) est tout à fait envisageable et proposée : l'avantage est qu'il n'est pas nécessaire de lier le terminal de communication et le lecteur de cartes. L'inconvénient est que le lecteur de cartes doit par voie de conséquence être muni de ses propres moyens d'alimentation (batterie ou source de courant supplémentaire), ce qui implique une organisation logistique plus importante et un relatif inconfort. Il existe également des solutions de connexion par l'intermédiaire d'un port USB à la place du port Jack.

Quoi qu'il en soit, ces solutions permettent donc au commerçant de réceptionner un paiement par l'intermédiaire de son terminal mobile (le smartphone) qui fait alors office de terminal de paiement et de caisse enregistreuse. L'avantage, pour le commerçant est évident : celui-ci n'a pas besoin de disposer d'un terminal de paiement, souvent couteux et encombrant, pour réceptionner des paiements. Par ailleurs, le lecteur de cartes est compact, léger et peu encombrant. Cette solution présente cependant deux inconvénients : le premier tient aux frais (commissions) qui sont prélevés pour effectuer le paiement. En effet, l'utilisation d'un tel dispositif requiert actuellement qu'une partie du montant de la transaction soit reversée à la société fournissant le lecteur de cartes ; ce problème, cependant est plus un problème économique que technique. Le deuxième problème tient en la relative absence de sécurisation des données de paiement. En effet, dans ces solutions, le lecteur de cartes est en charge de la lecture des données de la carte bancaire, que ce soit les données en provenance d'une carte magnétique ou les données en provenance d'une carte à puce. La transmission de ces données au terminal mobile est effectuée par le lecteur de cartes, une fois que ces données sont lues. Les données de carte bancaires sont (normalement) chiffrées par le lecteur de cartes avant d'être transmises au terminal de communication, selon un procédé de chiffrement propre au concepteur de la solution. Ainsi, des mesures de sécurisation suffisantes sont prises pour la transmission des données au terminal de communication. En revanche, le terminal de communication en lui-même n'est pas nécessairement sécurisé (à la différence d'un terminal de paiement « classique ». Il est donc possible (et probable), qu'un terminal de communication fasse l'objet d'une modification non autorisée, par exemple par un fraudeur, afin de récupérer les données de carte bancaires qui sont utilisées par le terminal de communication pour réaliser les transactions de paiement. Pour effectuer une telle modification non autorisée du terminal de communication, le fraudeur peu par exemple proposer une application, sur un magasin d'applications, cette application ayant des fonctionnalités de base, non frauduleuses, et une fonctionnalité frauduleuse dont l'objectif est de récupérer les données de carte bancaires.

Or, il est très difficile, voire impossible, d'assurer une sécurisation du terminal de communication du commerçant, et ce pour plusieurs raisons. La première tient à la grande diversité de terminaux de communication présents sur le marché : le nombre de modèles de terminaux est tel qu'il est en pratique impossible de maîtriser les architectures matérielles et logicielles de tous ces terminaux. C'est particulièrement le cas des terminaux dits « chinois », à bas coûts, dont la conception est souvent une copie non optimisée de celle de terminaux existants d'autres constructeurs (de type coréens ou américains) et qui notamment n'intègrent pas d'environnements d'exécution sécurisés, de mémoires sécurisées et de gestion fine d'éléments de sécurisation *(« secure element* ») (pour des raisons de prix et d'absence de maitrise technologique). La deuxième raison tient au fait que le terminal de communication est avant toute chose un terminal généraliste, multimédia : il n'a pas pour objet de traiter les données de manière sécurisée. De ce fait, il n'existe aucune restriction quant à l'installation d'applications ou de contenus sur ce terminal.

Le risque de vol de données de cartes bancaires est encore plus problématique lorsqu'il s'accompagne du vol du code PIN de ces cartes. En effet, comme exposé précédemment, les dispositifs existant gèrent un paiement soit en utilisant la bande magnétique soit la carte à puce. En règle générale, l'utilisation d'une bande magnétique entraine l'obligation d'effectuer une signature manuscrite pour valider le paiement. Dans ce cas, l'utilisateur utilise un stylet et/ou un doigt pour signer sur l'écran du terminal de communication du commerçant. L'utilisation d'une carte à puce nécessite quant à elle l'utilisation d'un code PIN (code d'identification personnel, *« personnal identification number »)* pour valider la transaction. Pour saisir ce PIN, l'utilisateur utilise un clavier virtuel affiché sur l'écran du terminal de communication pour entrer son PIN. Or, le vol de ce code PIN, conjointement au vol des données de la carte bancaire permet à un fraudeur de réaliser une copie intégrale de la carte de paiement de l'utilisateur (du client) à) l'insu de celui-ci et du commerçant lui-même. Or, l'affichage du clavier virtuel de saisie du code PIN est géré par l'application de paiement qui est installée sur le terminal de communication (il s'agit de l'application de paiement qui va de pair avec le lecteur de cartes connectée au terminal de communication). Le document US 2016/125181 A1 décrit par exemple un clavier virtuel de saisie d'un code PIN dont l'affichage est géré uniquement au niveau d'un terminal de communication grand public. Plusieurs possibilités de fraude existent : une première consiste à récupérer les chiffres issus de la frappe sur le clavier virtuel directement en mémoire du terminal de communication, en réalisant une lecture de la zone mémoire où ce code est provisoirement enregistré après saisie. Une deuxième possibilité de fraude consiste à imiter l'apparence du clavier virtuel de l'application de paiement et à requérir la saisie du code PIN en plus (ou à la place) de l'application de paiement légitime. D'autres possibilités de fraude existent, mais l'objet ici n'est pas de les détailler. Le document WO 2014/013252 A2 décrit la possibilité de faire intervenir un serveur distant auquel le terminal de communication peut se connecter lorsque la saisie d'un code PIN est requise, afin de mieux sécuriser une telle saisie. Toutefois, une telle solution est complexe.

Quoi qu'il en soit, il est périlleux de saisir un code PIN sur une application de paiement exécutée sur un smartphone. Il existe donc un besoin de fournir une solution de saisie de code PIN qui garantisse la confidentialité du code saisi afin de limiter les possibilités de fraudes découlant de l'utilisation d'un terminal de communication pour effectuer un paiement.

### 3. Résumé

L'invention ne présente pas au moins certains des inconvénients de l'art antérieur. Plus particulièrement, il est proposé une Méthode de traitement de données transactionnelles, méthode mise en œuvre par l'intermédiaire d'un terminal de communication disposant d'un écran tactile, méthode du type comprenant une saisie, au cours d'une transaction, sur ledit écran tactile dudit terminal de communication, une donnée d'identification personnelle d'un utilisateur.

La méthode comprenant, au niveau du terminal de communication :
- une étape de détection d'une nécessité de saisie d'une donnée d'identification personnelle ;
- une étape de transmission, à un lecteur de cartes connecté au terminal de communication, d'une requête de prise en charge d'affichage d'un clavier virtuel ;
- une étape de saisie, sur ledit clavier virtuel, par ledit utilisateur, de la donnée d'identification personnelle ;
- une étape de réception, de la part du lecteur de cartes, de ladite donnée d'identification personnelle.

Ainsi, la solution proposée permet de réaliser une partie des actions nécessaires à la mise en œuvre d'une transaction de paiement, en tirant avantage d'un dispositif extérieur, lequel est utilisé en tant qu'entité indépendante. Il en résulte que le dispositif extérieur, également appelé lecteur de cartes, exerce, de manière autonome, au moins une action entrant dans la mise en œuvre de la vérification de la connaissance, par l'utilisateur, d'une donnée secrète, qui peut être le code PIN ou toute autre donnée adéquate dans la validation de la transaction.

Par ailleurs, la méthode pendante, mise en œuvre de manière indépendante au niveau dudit lecteur de cartes, comprend :
- une étape de réception, en provenance du terminal de communication, de la requête de prise en charge d'affichage d'un clavier virtuel ;
- une étape de génération du clavier virtuel à afficher sur ledit écran tactile dudit terminal de communication ;
- une étape d'obtention de la donnée d'identification personnelle à l'aide dudit clavier virtuel ; et
- une étape de transmission de la donnée d'identification personnelle au terminal de communication.

Selon une caractéristique particulière, ladite donnée d'identification personnelle reçue lors de ladite étape de réception est chiffrée à l'aide d'une clé de chiffrement du lecteur de cartes.

Selon une caractéristique particulière, la méthode comprend une étape de transmission de la donnée d'identification personnelle à un serveur de gestion de transaction auquel le terminal de communication est connecté.

Selon une caractéristique particulière, l'étape de génération du clavier virtuel à afficher sur ledit écran tactile comprend l'obtention d'au moins un nombre aléatoire ou pseudo aléatoire et en ce que l'emplacement des touches dudit clavier virtuel est déterminé en fonction dudit au moins un nombre aléatoire ou pseudo aléatoire.

Selon un mode de réalisation particulier, lecteur de cartes respecte une norme de traitement de données de transaction de paiement.

Selon une caractéristique particulière, la requête de prise en charge d'affichage d'un clavier virtuel comprend une donnée représentative d'un passage dudit terminal de communication d'un mode de fonctionnement dit « maitre » à un mode de fonctionnement dit « esclave », ce deuxième mode de fonctionnement conditionnant la mise en œuvre de ladite méthode de traitement de données transactionnelles sous le contrôle exclusif du lecteur de cartes.

Selon un mode de réalisation particulier, ledit lecteur de cartes est un lecteur de cartes à puce.

Selon un autre aspect, l'invention se rapporte également à un terminal de communication comprenant des moyens de traitement de données transactionnelles, terminal de communication disposant d'un écran tactile, terminal comprenant des moyens de saisie sur ledit écran tactile, une donnée d'identification personnelle d'un utilisateur, ledit terminal comprenant :
- des moyens de détection d'une nécessité de saisie d'une donnée d'identification personnelle ;
- des moyens de transmission, à un lecteur de cartes connecté au terminal de communication, d'une requête de prise en charge d'affichage d'un clavier virtuel ;
- des moyens de saisie, sur ledit clavier virtuel, par ledit utilisateur, de la donnée d'identification personnelle ;
- des moyens de réception, de la part du lecteur de cartes, de ladite donnée d'identification personnelle.

Selon un autre aspect, l'invention se rapporte également à un lecteur de cartes comprenant des moyens de traitement de données transactionnelles, comprenant en outre des moyens de communication avec un terminal de communication auquel est susceptible d'être connecté durant le traitement d'une transaction, ledit lecteur de cartes comprenant :
- des moyens de réception, en provenance du terminal de communication, d'une requête de prise en charge d'affichage d'un clavier virtuel ;
- des moyens de génération du clavier virtuel à afficher sur un écran tactile dudit terminal de communication ;
- des moyens d'obtention d'une donnée d'identification personnelle à l'aide dudit clavier virtuel ; et
- des moyens de transmission de la donnée d'identification personnelle au terminal de communication.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée, pour la saisie d'une donnée d'identification personnelle ;
- la figure 2 présente trois clavier numériques générés aléatoirement ;
- la figure 3 décrit un terminal de communication pour la mise en œuvre de la méthode de traitement décrite ;
- la figure 4 décrit un lecteur de cartes pour la mise en œuvre de la méthode de traitement décrite.

### 5. Description

### 5.1. Rappels

Comme explicité précédemment, l'objet de la présente est d'éviter un vol de données lors de la saisie d'un code d'identification personnel sur un terminal de communication de type smartphone, pour effectuer une transaction et par exemple une transaction de paiement (il peut également s'agir d'autres types de transaction, comme des transaction relatives à des prescriptions médicales, des transaction de signatures de documents électroniques, etc.). L'objectif est de sécuriser la saisie de données effectuée sur un écran tactile, qui a priori n'est pas sécurisé (au sens PCI PED « Pin Entry Device »). Ainsi, on ne peut assurer, dans la cas classique où l'invention n'est pas mise en œuvre, que le code PIN, ou le mot de passe ou toute autre donnée d'identification, ne sera pas volé, détourné.

La technique proposée se place dans un cadre procédural relativement précis, cadre dans lequel le terminal de communication est connecté avec un lecteur de cartes (lecteur de cartes de paiement à bande magnétique, lecteur de cartes de paiement à puce, lecteur de cartes de paiement sans contact, autre technologie) et qu'une identification de l'utilisateur doive être réalisée pour effectuer une validation de la transaction (par saisie d'un code pin par exemple ou par saisie de toute autre information de nature confidentielle pouvant être associée à une validation d'une transaction, il peut s'agir par exemple d'un mot de passe, d'un code de vérification permanent ou périodique), l'identification et la transaction étant normalement réalisée par l'intermédiaire du terminal de communication.

Le principe général consiste à tirer parti de la relative sécurité apportée par le lecteur de cartes pour partager la mise en œuvre de la transaction, plus particulièrement pour partager la phase de vérification de la connaissance d'un secret par l'utilisateur (code PIN, mot de passe, etc.). Plusieurs modes de réalisation de ce principe sont décrits par la suite. D'une manière générale, cependant, il est proposé une gestion du clavier virtuel à afficher sur le terminal de communication par le lecteur de cartes. Plus particulièrement, quels que soient les modes de réalisation mis en œuvre, il est proposé que la gestion du clavier virtuel, qui est affiché sur l'écran du terminal de communication soit mis en œuvre au moins en partie par le lecteur de cartes.

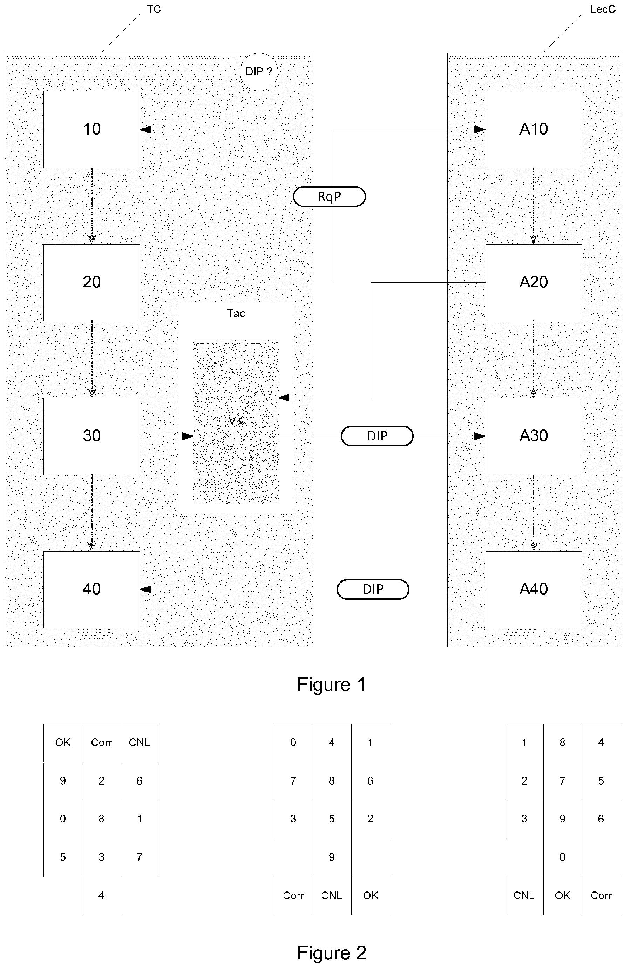

On présente, en relation avec la figure 1, le principe général de la technique décrite ici.

L'invention se rapporte plus particulièrement à une méthode de traitement de données transactionnelles, méthode mise en œuvre par l'intermédiaire d'un terminal de communication (TC) disposant d'un écran tactile (Tac), méthode du type comprenant une saisie, au cours d'une transaction, sur ledit écran tactile (Tac) dudit terminal de communication (TC), une donnée d'identification personnelle (DIP) d'un utilisateur, la méthode comprenant, au niveau du terminal de communication (TC) :
- une étape de détection (10) d'une nécessité de saisie d'une donnée d'identification personnelle (DIP) ;
- une étape de transmission (20), à un lecteur de cartes (LecC) connecté au terminal de communication (TC), d'une requête (RqP) de prise en charge d'affichage d'un clavier virtuel (VK) ;
- une étape de saisie (30), sur ledit clavier virtuel (VK), par ledit utilisateur, de la donnée d'identification personnelle (DIP) ;
- une étape de réception (40), de la part du lecteur de cartes (LecC), de ladite donnée d'identification personnelle (DIP).

Ainsi, d'une manière générale, le lecteur de cartes prend en charge la gestion du traitement de la donnée d'identification personnelle à la place du terminal de communication, ce qui permet de priver un logiciel malveillant de telles données. La données d'identification personnelle est transmise au terminal de communication par indirection : cela signifie que bien que la saisie soit effectuée sur l'écran tactile du terminal de communication, le récipiendaire de cette saisie n'est pas, en premier lieu, le terminal de communication, mais bien le lecteur de cartes connecté au terminal de communication, ce dernier transmettant ensuite le résultat de cette saisie au terminal de communication.

Ainsi, du point de vue du lecteur de cartes, la méthode comprend :
- une étape de réception (A10), en provenance du terminal de communication (TC), de la requête (RqP) de prise en charge d'affichage d'un clavier virtuel (VK) ;
- une étape de génération (A20) du clavier virtuel (VK) à afficher sur ledit écran tactile (Tac) dudit terminal de communication (TC) ;
- une étape d'obtention (A30) de la donnée d'identification personnelle (DIP) à l'aide dudit clavier virtuel (VK) ; et
- une étape de transmission (A40) de la donnée d'identification personnelle (DIP) au terminal de communication (TC).

Plusieurs modes de réalisation et variantes sont bien entendu envisageables pour la mise en œuvre de cette méthode générale. Deux modes de réalisation principaux peuvent cependant être distingués :
- dans le premier mode de réalisation, présenté ci-après, le lecteur de cartes opère un contrôle total des entrées et des sorties du terminal de communication : au moment de la saisie du code PIN ou du mot de passe, le lecteur de cartes prend le contrôle du terminal de communication, affiche le clavier virtuel et réceptionne les entrées saisies par l'utilisateur (PIN, mot de passe,...) et transmet ces données, sous forme chiffrée, au terminal de communication ;
- dans le deuxième mode de réalisation, le lecteur de cartes reçoit, de la part du terminal de communication, une requête d'obtention d'un clavier virtuel ; le lecteur de cartes génère aléatoirement un clavier virtuel, qu'il chiffre et transmet au terminal de communication (il s'agit par exemple d'une image générée par le lecteur de cartes) ; le terminal de communication déchiffre ce clavier virtuel, et l'affiche (il affiche l'image transmise par le lecteur de cartes) ; le terminal de communication reçoit les saisies effectuées par l'utilisateur : il chiffre ces saisies et les transmets au lecteur de cartes : le lecteur de cartes déchiffre les saisies et effectue la correspondance pour obtenir le code PIN, qu'il chiffre et transmet à son tour au terminal de communication.

La figure 2 présente des exemples de clavier virtuels numériques, générés aléatoirement par le lecteur de cartes. La génération aléatoire du clavier virtuel comprend l'obtention d'au moins un nombre aléatoire ou pseudo aléatoire ; que l'emplacement des touches du clavier virtuel est déterminé en fonction dudit au moins un nombre aléatoire ou pseudo aléatoire. Plus particulièrement, au moins deux aléas peuvent être pris en compte : le premier tenant à l'emplacement des touches de validation (OK), d'annulation (CNL) et de correction (Corr) et le deuxième se rapportant à la manière dont les touches sont agencées. Ainsi, la détermination de l'emplacement des touches est très difficile.

On suppose que le lecteur de cartes est sécurisé, bien que cela ne soit pas nécessaire du point de vue du principe général de l'invention : celle-ci consiste à piloter le terminal de communication depuis l'extérieur (depuis le lecteur de cartes). On suppose également que le lecteur de cartes dispose de suffisamment de capacités de traitement de données et de suffisamment de mémoire pour effectuer les opérations précitées.

Dans la suite, un mode de réalisation appliqué à la mise en œuvre d'une opération de paiement est présenté. Il est cependant clair que ce mode de réalisation ne doit pas être considéré à titre limitatif et que tout autre mode de réalisation faisant intervenir la gestion, par un lecteur de cartes, d'une portion de transaction comprenant la saisie d'une donnée d'identification personnelle sur un écran tactile entre dans le cadre de la présente technique.

### 5.2. Description d'un mode de réalisation

### 5.2.1. Déroulement d'une transaction

Dans ce mode de réalisation, on suppose qu'un terminal de communication est physiquement connecté à un lecteur de cartes par l'intermédiaire d'un port USB de type OTG. Le lecteur de cartes, quant à lui est un lecteur de cartes de paiement permettant au moins la lecture de carte à puce. Le lecteur de cartes de paiement reçoit une alimentation en provenance du terminal de communication par l'intermédiaire du port USB du terminal de communication. Le terminal de communication exécute une application de paiement (également appelée application MPEA ou simplement MPEA). Cette application de paiement est en charge de la réalisation de transaction de paiement conjointement avec le lecteur de cartes de paiement. On suppose également, dans ce mode de réalisation, que le lecteur de cartes est sécurisé : il est par exemple conforme à la norme PCI PTS. Le lecteur de cartes, par ailleurs, comprend un processeur de traitement de données de cartes bancaires, une mémoire, des moyens de communication avec un terminal de communication (dans le cas présent, ce sont des moyens de connexion mettant en œuvre une connexion USB). Le lecteur de cartes diffère des lecteurs de cartes existants en ce qu'il comprend des moyens de prise de contrôle, temporaire, du terminal de communication : cette prise de contrôle s'entend à la prise de contrôle de la saisie et la prise de contrôle de l'affichage.

Le lecteur de cartes diffère également des lecteurs de cartes existants en ce qu'il comprend des moyens de chiffrement supplémentaires par rapport aux lecteurs de cartes existants : les moyens de chiffrement ne s'entendent pas seulement à des moyens de chiffrement des données de carte bancaires, mais également à d'autres données, telles que les données d'entrée et de sortie qui sont transmises et/ou reçues par l'intermédiaire du terminal de communication.

Dans ce mode de réalisation, on tire parti du caractère sécurisé du lecteur de cartes (le lecteur de cartes) pour faire effectuer, à ce lecteur de cartes, des opérations sensibles en lieu et place du terminal de communication, jugé peu fiable pour ces opérations sensibles. Plus particulièrement dans ce mode de réalisation, la saisie du code PIN est effectuée en conjonction avec le lecteur de cartes, comme explicité dans le principe général.

Dans ce mode de réalisation, lors de la mise en œuvre de l'application de gestion de transactions (application de paiement) sur le terminal de communication préalablement à la saisie du code PIN sur l'écran du terminal de communication (saisie tactile), celle-ci transmet, au lecteur de cartes, une commande de bascule. Cette commande provoque, lorsqu'elle est reçue par le lecteur de cartes, un basculement en mode « *maitre ».* Il en résulte une transmission, par le lecteur de cartes, d'une commande optionnelle en mode « esclave » au terminal de communication.

Une fois cette commande reçue, le lecteur de cartes passe en mode « *maître »,* mode dans lequel il contrôle à la fois les entrées et les sorties du terminal de communication. Dans ce mode, les entrées et les sorties sont donc gérées par le lecteur de cartes. Le lecteur de cartes effectue donc une suite plus ou moins étendue d'actions, afin de réaliser un traitement des données transactionnelles et de mener à bien la transaction de paiement. Plus particulièrement, le lecteur de cartes :
- génère le clavier virtuel (VK) à afficher sur ledit écran tactile (Tac) dudit terminal de communication (TC) ; cette génération peut être aléatoire, bien que cela ne soit pas nécessaire dans ce mode de réalisation puisque la saisie du code PIN est sous la contrôle total du lecteur de cartes ;
- transmet, au terminal de communication, ce clavier virtuel (VK), accompagné d'une commande d'affichage ;
- réceptionne les données issues de la saisie du code PIN réalisée par l'utilisateur sur le clavier virtuel (VK) ;
- détermine le code PIN correspondant ;
- chiffre le code PIN avec une clé de chiffrement, et optionnellement commande au terminal de communication, la transmission de ce code PIN à un serveur distant de traitement de transaction de paiement (serveur bancaire) qui s'occupe par la suite de la vérification de la validité du code saisie (validation en ligne).

Cette manière de faire permet d'assurer que la saisie du code PIN sur l'écran tactile du terminal de communication respecte les standards de sécurité exigés pour une validation des transactions et notamment que cette saisie est compatible avec la mise en œuvre d'une transaction de paiement EMV de type « carte présente ».

Dans un autre mode de réalisation, dans lequel le lecteur de cartes ne contrôle pas le terminal de communication, les étapes suivantes sont mises en œuvre :
- génère le clavier virtuel (VK) à afficher sur ledit écran tactile (Tac) dudit terminal de communication (TC) ; cette génération peut avantageusement être aléatoire, notamment du point de vue de placement des touches de correction, de validation et d'annulation, voire totalement aléatoire de point de vue du placement des touches numériques ;
- transmet, au terminal de communication, ce clavier virtuel (VK), éventuellement chiffré à l'aide d'une clé de session partagée avec le terminal de communication ;
- réceptionne les données issues de la saisie du code PIN réalisée par l'utilisateur sur le clavier virtuel (VK) : il s'agit de coordonnées, comme dans le premier cas de figure, permettant de faire concorder ces coordonnées avec le clavier généré ;
- détermine le code PIN correspondant ;
- chiffre le code PIN avec une clé de chiffrement et transmet ce code PIN au terminal de communication.

Le terminal de communication, transmet alors ce code PIN à un serveur distant de traitement de transaction de paiement (serveur bancaire) qui s'occupe par la suite de la vérification de la validité du code saisie (validation en ligne). Cette manière de faire permet également d'assurer que la saisie du code PIN sur l'écran tactile du terminal de communication respecte les standards de sécurité.

### 5.3. Audit

Dans tous les modes de réalisation, en sus des opérations réalisées par le lecteur de cartes pour le compte de l'application MPEA, le lecteur de cartes est en outre en mesure de réaliser un audit du terminal de communication lui-même. Selon les contraintes opérationnelles et le paramétrage du lecteur de cartes, cet audit est réalisé :
- à chaque fois que le lecteur de cartes est connecté à un nouveau terminal de communication : un audit de ce nouveau terminal de communication est effectué ;
- en fonction d'un nombre prédéterminé de transaction gérées par le terminal de communication et/ou le lecteur de cartes : lorsqu'un nombre prédéterminé de transactions a été effectué, un audit de contrôle est exécuté par le lecteur de cartes afin de s'assurer de la fiabilité constante du terminal de communication ;
- selon une périodicité temporelle prédéterminée : lorsqu'un nombre prédéterminé de jours se sont écoulés, un audit de contrôle est exécuté par le lecteur de cartes afin de s'assurer de la fiabilité constante du terminal de communication.

L'audit consiste, d'une part, à vérifier l'intégrité de l'appareil et notamment à vérifier que l'appareil n'a pas subi de mises à jour logicielles non autorisées de type « JailBreack » ou « rootage ». D'autre part, l'audit peut consister en une vérification des applications installées sur l'appareil et notamment à rechercher des applications connues pour poser des problèmes de sécurité. Pour ce faire lecteur de cartes compare chaque application installée sur le terminal de communication à une liste noire d'applications préalablement déterminée. Cette liste noire, comme cela est précisé par la suite, peut être transmise par l'intermédiaire d'une entité externe, tierce, connecté au terminal de communication par l'intermédiaire d'un réseau de communication. Lorsque le lecteur de cartes constate une mise à jour logicielle non autorisée et/ou l'installation d'une application non autorisée, un message est transmis à l'application MPEA et le lecteur de cartes se bascule dans un état d'inactivité (i.e. il n'est pas possible de réaliser une transaction en utilisant le lecteur de cartes). L'application MPEA se charge d'avertir le commerçant de l'impossibilité d'utiliser le lecteur de cartes.

L'audit peut également consister en une série de routines de vérifications de bon fonctionnement, routines dont l'objectif est de simuler la mise en œuvre de transactions de paiement. Au cours de cet audit, l'application MPEA et le lecteur de cartes simulent la mise en œuvre d'une transaction. L'objectif de cette simulation est de permettre au lecteur de cartes de contrôler le bon déroulement de la transaction, et notamment que les données chiffrées et/ou haschés, issues de la mise en œuvre de la transaction ne subissent pas d'altération et/ou de tentatives d'altération au cours de l'exécution de la transaction fictive. L'objectif est ici de détecter une erreur qui pourrait survenir durant la transaction fictive. L'application MPEA, sur requête du lecteur de cartes, lance une transaction fictive, avec des données bancaires de commerçant fictives (mais prédéterminées). Le lecteur de cartes a également connaissance de ces données de commerçant fictives (qui sont enregistrées dans un espace mémoire sécurisé du lecteur de cartes). L'application MPEA requiert, auprès du lecteur de cartes, l'obtention de données de cartes bancaires. Le lecteur de cartes utilise des données de carte bancaire fictives, également enregistrées au sein d'un espace mémoire sécurisé du lecteur de cartes (et connues de l'application MPEA) et transmet ces données sous forme chiffrées à l'application MPEA pour simuler l'insertion de la carte bancaire. L'application MPEA vérifie la conformité des données reçues : si elles ne sont pas conformes à celles connues par l'application MPEA, alors celle-ci est en mesure de détecter une anomalie de fonctionnement (soit une anomalie au niveau du terminal de communication, soit une anomalie au niveau du lecteur de carte) et l'application MPEA ne fonctionnera pas.

Une autre phase d'audit est également menée pour l'obtention du code PIN fictif: l'application MPEA requiert la gestion de cette partie de la transaction par le lecteur de cartes. Le lecteur de cartes met en œuvre cette partie de la transaction et attend la fourniture, par l'application MPEA, d'un code PIN fictif, connue de celle-ci. Lorsque le code PIN reçu est différent du code PIN fictif attendu, le lecteur de cartes est en mesure de détecter la survenance d'un problème et donc de stopper son fonctionnement.

L'objectif est également de détecter une éventuelle altération du fonctionnement de l'application MPEA. Pour mettre en œuvre cette partie de l'audit, le lecteur de cartes forge une série de défis que l'application MPEA doit être en mesure de résoudre.

Ainsi, dans au moins un mode de réalisation, comme cela vient d'être exposé, l'audit est effectué par combinaison du fonctionnement de l'application MPEA et du lecteur de cartes. On rappelle en effet que la mise en œuvre d'une transaction nécessite tout à la fois l'application MPEA et le lecteur de cartes. L'application MPEA et le lecteur de cartes peuvent être créées/construites par des industriels différents et indépendants mais elles partagent un mode d'interaction prédéfini dans la présente. Ces audits combinés permettent de détecter tant une altération au niveau du fonctionnement du lecteur de cartes qu'une altération du fonctionnement du terminal de communication et/ou de l'application MPEA.

Dans au moins un mode de réalisation, le lecteur de cartes comprend par ailleurs des moyens de mise à jours, par exemple des moyens de mises à jours de paramètres (telles que les listes d'applications indésirables) et/ou des moyens de mise à jours de clés de chiffrement. De manière préférentielle, ces moyens sont pilotés par l'intermédiaire de l'application MPEA, laquelle agit sur instruction d'un serveur de mise à jour, utilisé pour transmettre des données de mise à jour au lecteur de carte. Pour vérifier l'authenticité des données fournies par le terminal de communication, le lecteur de carte met par exemple en œuvre un mécanisme de gestion de jetons chiffrés, jetons qui sont générés sous la forme de blocs chiffrés de manière successive par le serveur. Dès lors, le lecteur de cartes est en mesure de se prémunir d'une tentative de mise à jour non autorisée de la part d'une application MPEA corrompue.

### 5.4. Autres caractéristiques et avantages

Le mode de réalisation précédent a été décrit en supposant que le lecteur de cartes soit en mesure de contrôler le fonctionnement du terminal de communication et que le terminal de communication soit en mesure d'accepter un contrôle par le lecteur de cartes. Il existe plusieurs variantes du principe général de l'invention qui peuvent être substituées et/ou combinées au précédent mode de réalisation, et ce sans se départir du principe consistant à faire réaliser une partie de la transaction par un lecteur de cartes, à priori non soumis aux malveillances (lecteur de cartes qui est, dans un cas idéal, sécurisé).

Dans une déjà présentée variante, en lieu et place de l'exercice d'un contrôle par le lecteur de cartes sur le terminal de communication, le lecteur de cartes est utilisé pour générer et transmettre un masque d'écran spécifique. Ainsi, dans cette variante, plutôt que de donner le contrôle au lecteur de cartes (contrôle donné pour réaliser une partie de la transaction), on demande au lecteur de cartes de générer des écrans (ou des masques d'écrans) qui vont être affichés par le terminal de communication.

Une première possibilité, dans cette première variante, consiste à demander au lecteur de cartes de générer un masque d'écran représentant un clavier de saisie de code PIN : sur requête du terminal de communication, le lecteur de cartes génère aléatoirement un masque d'écran représentant le clavier virtuel du pinpad et transmet ce clavier virtuel au terminal de communication. Le terminal de communication récupère ce masque d'écran et l'affiche à destination de l'utilisateur ; l'utilisateur saisit son code PIN en utilisant les touches du masque d'écran transmis par le lecteur de cartes ; le terminal de communication obtient les coordonnées des touches saisies par l'utilisateur et transmet ces coordonnées au lecteur de cartes. Le lecteur de cartes, sur la base du masque d'écran et des coordonnées saisies transmet le code PIN (ou une version chiffrée du code PIN) saisit par l'utilisateur, qui est ensuite utilisée par le terminal de communication pour finaliser la transaction de paiement.

Une deuxième possibilité, dans cette première variante, consiste à réaliser une opération similaire à celle de la première possibilité, mais dans le cas d'un clavier complet, par exemple utilisé pour la saisie d'un mot de passe.

Dans une deuxième variante, le lecteur de cartes reçoit une commande d'obtention de clés de sessions, commande dans laquelle le terminal de communication requiert la transmission d'une ou plusieurs clés de session à utiliser pour d'une part chiffrer les données saisies sur le terminal de communication et/ou d'autre part initialiser les échanges avec un serveur transactionnel distant. La première situation (chiffrement des données saisies par le terminal de communication) assure que seules des entités autorisées sont en mesure de réaliser un chiffrement et un déchiffrement des données saisies : elle ne permet cependant pas de s'assurer qu'une application malveillante n'a pas au préalable, intercepté ces données (c'est-à-dire avant qu'elles ne soient chiffrées). La deuxième situation (initialiser les échanges avec un serveur transactionnel distant) permet d'accélérer les échanges avec ce serveur (car il n'y a pas besoin de mettre en œuvre un échange de clés sur un réseau de communication) et permet donc d'accélérer grandement le traitement générale de la transaction de paiement.

Dans une troisième variante, le lecteur de cartes reçoit une commande d'obfuscation, commande dans laquelle le terminal de communication requiert la transmission d'une bibliothèque d'exécution sécurisée. La bibliothèque d'exécution sécurisée est une bibliothèque de code qui permet de gérer au moins une partie de la transaction de paiement. Dans les solutions de l'art antérieur, cette bibliothèque est intégrée dans l'application de paiement qui est téléchargée sur le terminal de communication. Dans cette variante, cette bibliothèque est reçue par le terminal de communication, en provenance d'une entité externe, peu de temps avant la vérification des données personnelles de l'utilisateur (code PIN, mot de passe, signature sécurisée, etc.). Deux possibilités sont offertes pour la réception de cette bibliothèque :
- la première consiste à recevoir cette bibliothèque directement en provenance d'une entité externe, sur requête du terminal de communication à destination de cette entité externe, lors de la mise en œuvre de la transaction ; l'entité externe, recevant la requête du terminal de communication : vérifie la validité de la requête (au moyen des données contenues dans celle-ci : identifiant du terminal de communication, vérification de compte de commerçant), procède à l'établissement d'une connexion sécurisée avec le terminal de communication et transmet, par l'intermédiaire de cette connexion sécurisée, la bibliothèque à exécuter ; la bibliothèque transmise est modifiée par l'entité externe, préalablement à sa transmission, en fonction d'une donnée d'obfuscation localement obtenue par l'entité externe ;
- la deuxième consiste à utiliser le lecteur de cartes : le terminal de communication requiert une donnée d'initialisation auprès du lecteur de cartes ; le lecteur de cartes prépare une donnée d'initialisation à destination de l'entité externe : cette donnée d'initialisation comprend une donnée d'obfuscation et un identifiant du lecteur de cartes ; la donnée d'initialisation est transmise par le lecteur de cartes au terminal de communication, lequel transmet, dans une requête d'obtention de bibliothèque, cette donnée d'initialisation à l'entité externe ; l'entité externe, recevant la requête du terminal de communication : vérifie la validité de la requête (au moyen des données contenues dans celle-ci : identifiant du terminal de communication, vérification de compte de commerçant), procède à l'établissement d'une connexion sécurisée avec le terminal de communication et transmet, par l'intermédiaire de cette connexion sécurisée, la bibliothèque à exécuter qui a été modifiée avec la donnée d'obfuscation fournie par le lecteur de cartes.

### 5.5. Dispositifs de mise en œuvre

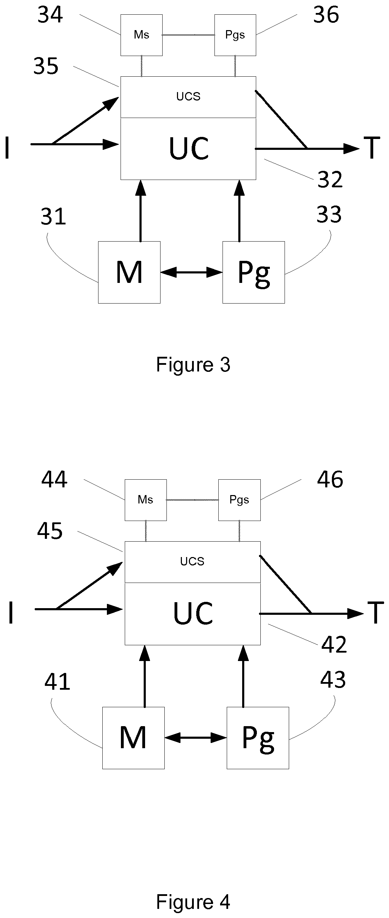

On décrit, en relation avec la figure 3, un terminal de communication mis en œuvre pour gérer, la saisie de données d'identification personnelles, selon le procédé décrit préalablement.

Par exemple, le terminal de communication comprend une mémoire 31 comprenant par exemple une mémoire tampon, un processeur de traitement général 32, équipée par exemple d'un microprocesseur, et pilotée par un programme d'ordinateur 33, et/ou une mémoire sécurisée 34, un processeur de traitement sécurisé 35, pilotée par un programme d'ordinateur 36, ces unités de traitement mettant en œuvre des procédés de traitement de données tels que décrits précédemment pour effectuer des traitements de données transactionnelles, traitements qui sont au moins partiellement mis en œuvre en conjonction avec un lecteur de cartes connecté au terminal de communication.

À l'initialisation, les instructions de code du programme d'ordinateur 36 sont par exemple chargées dans une mémoire avant d'être exécutées par le processeur de traitement sécurisé 35. Le processeur de traitement 35 reçoit en entrée au moins une donnée représentative d'une nécessité de saisie d'une donnée d'identification personnelle. Le processeur de traitement sécurisé 35 met en œuvre les étapes du procédé de traitement, selon les instructions du programme d'ordinateur 36 pour transmettre au lecteur de cartes, une requête d'obtention de données d'identification personnelles.

Pour cela, le terminal de communication comprend, outre la mémoire 34, des moyens de communications, tels que des modules de communication réseau, des moyens de transmission de donnée et des circuits de transmission de données entre les divers composants du terminal de communication.

Les moyens précédemment décrits peuvent se présenter sous la forme d'un processeur particulier implémenté au sein d'un terminal, tel qu'un terminal de paiement. Selon un mode de réalisation particulier, le terminal de communication met en œuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

On décrit, en relation avec la figure 4, un lecteur de cartes mis en œuvre pour gérer l'obtention de données d'identification personnelles, selon le procédé décrit préalablement.

Par exemple, le lecteur de cartes comprend une mémoire 41 comprenant par exemple une mémoire tampon, un processeur de traitement général 42, équipée par exemple d'un microprocesseur, et pilotée par un programme d'ordinateur 43, et/ou une mémoire sécurisée 44, un processeur de traitement sécurisé 45, pilotée par un programme d'ordinateur 46, ces unités de traitement mettant en œuvre des procédés de traitement de données tels que décrits précédemment pour effectuer la génération d'un clavier virtuel à afficher sur l'écran tactile du terminal de communication .

À l'initialisation, les instructions de code du programme d'ordinateur 46 sont par exemple chargées dans une mémoire avant d'être exécutées par le processeur de traitement sécurisé 45. Le processeur de traitement 45 reçoit en entrée au moins une donnée représentative d'une requête de génération d'un écran virtuel. Le processeur de traitement sécurisé 45 met en œuvre les étapes du procédé de traitement, selon les instructions du programme d'ordinateur 46 pour générer un écran virtuel, le transmettre au terminal de communication, obtenir des données représentative de touches saisies par l'utilisateur et pour transmettre les données d'identification correspondantes au terminal de communication.

Pour cela, le lecteur de cartes comprend, outre la mémoire 44, des moyens de communications, tels que des modules de communication réseau, des moyens de transmission de donnée et des circuits de transmission de données entre les divers composants du lecteur de cartes.

Les moyens précédemment décrits peuvent se présenter sous la forme d'un processeur particulier implémenté au sein d'un terminal, tel qu'un terminal de paiement. Selon un mode de réalisation particulier, le lecteur de cartes met en œuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

## Revendications

1. Méthode de traitement de données transactionnelles, méthode mise en œuvre par l'intermédiaire d'un terminal de communication (TC) disposant d'un écran tactile (Tac), méthode du type comprenant une saisie, au cours d'une transaction, sur ledit écran tactile (Tac) dudit terminal de communication (TC), d'une donnée d'identification personnelle (DIP) d'un utilisateur, la méthode comprenant, au niveau du terminal de communication (TC), une étape de détection (10) d'une nécessité de saisie d'une donnée d'identification personnelle (DIP), ladite méthode étant **caractérisé en ce qu'**elle comprend en outre :
- une étape de transmission (20), à un lecteur de cartes (LecC) connecté au terminal de communication (TC), d'une requête (RqP) de prise en charge d'affichage d'un clavier virtuel (VK), ladite requête (RqP) comprenant une donnée représentative d'un passage dudit terminal de communication d'un mode de fonctionnement dit « maitre » à un mode de fonctionnement dit « esclave », ce deuxième mode de fonctionnement conditionnant la mise en œuvre de ladite méthode de traitement de données transactionnelles sous le contrôle exclusif du lecteur de cartes ;
- une étape de saisie (30), sur ledit clavier virtuel (VK), par ledit utilisateur, de la donnée d'identification personnelle (DIP) ;
- une étape de réception (40), de la part du lecteur de cartes (LecC), de ladite donnée d'identification personnelle (DIP).

2. Méthode de traitement selon la revendication 1, **caractérisé en ce qu'**elle comprend, au niveau dudit lecteur de cartes (LecC) :
- une étape de réception (A10), en provenance du terminal de communication (TC), de la requête (RqP) de prise en charge d'affichage d'un clavier virtuel (VK) ;
- une étape de génération (A20) du clavier virtuel (VK) à afficher sur ledit écran tactile (Tac) dudit terminal de communication (TC) ;
- une étape d'obtention (A30) de la donnée d'identification personnelle (DIP) à l'aide dudit clavier virtuel (VK) ; et
- une étape de transmission (A40) de la donnée d'identification personnelle (DIP) au terminal de communication (TC).

3. Méthode de traitement selon la revendication 1, **caractérisé en ce que** ladite donnée d'identification personnelle (DIP) reçue lors de ladite étape de réception est chiffrée à l'aide d'une clé de chiffrement du lecteur de cartes (LecC).

4. Méthode de traitement selon la revendication 1, **caractérisé en ce qu'**elle comprend une étape de transmission de la donnée d'identification personnelle (DIP) à un serveur de gestion de transaction auquel le terminal de communication est connecté.

5. Méthode selon la revendication 2, **caractérisé en ce que** ladite étape de génération (A20) du clavier virtuel (VK) à afficher sur ledit écran tactile (Tac) comprend l'obtention d'au moins un nombre aléatoire ou pseudo aléatoire et **en ce que** l'emplacement des touches dudit clavier virtuel est déterminé en fonction dudit au moins un nombre aléatoire ou pseudo aléatoire.

6. Méthode selon la revendication 1, **caractérisé en ce que** le lecteur de cartes respecte une norme de traitement de données de transaction de paiement.

7. Terminal de communication comprenant des moyens de traitement de données transactionnelles, terminal de communication (TC) disposant d'un écran tactile (Tac), terminal comprenant des moyens de saisie sur ledit écran tactile (Tac), une donnée d'identification personnelle (DIP) d'un utilisateur, ledit terminal comprenant des moyens de détection d'une nécessité de saisie d'une donnée d'identification personnelle (DIP), ledit terminal étant **caractérisé en ce qu'**il comprend en outre :
- des moyens de transmission, à un lecteur de cartes (LecC) connecté au terminal de communication (TC), d'une requête (RqP) de prise en charge d'affichage d'un clavier virtuel (VK), ladite requête (RqP) comprenant une donnée représentative d'un passage dudit terminal de communication d'un mode de fonctionnement dit « maitre » à un mode de fonctionnement dit « esclave » ;
- des moyens de saisie, sur ledit clavier virtuel (VK), par ledit utilisateur, de la donnée d'identification personnelle (DIP) ;
- des moyens de réception, de la part du lecteur de cartes (LecC), de ladite donnée d'identification personnelle (DIP).

8. Lecteur de cartes (LecC) comprenant des moyens de traitement de données transactionnelles, comprenant en outre des moyens de communication avec un terminal de communication (TC) auquel ledit lecteur de cartes est susceptible d'être connecté durant le traitement d'une transaction, ledit lecteur de cartes étant **caractérisé en ce qu'**il comprend :
- des moyens de réception, en provenance du terminal de communication (TC), d'une requête (RqP) de prise en charge d'affichage d'un clavier virtuel (VK), ladite requête (RqP) comprenant une donnée représentative d'un passage dudit terminal de communication d'un mode de fonctionnement dit « maitre » à un mode de fonctionnement dit « esclave » ;
- des moyens de génération du clavier virtuel (VK) à afficher sur un écran tactile (Tac) dudit terminal de communication (TC) ;
- des moyens d'obtention d'une donnée d'identification personnelle (DIP) à l'aide dudit clavier virtuel (VK) ; et
- des moyens de transmission de la donnée d'identification personnelle (DIP) au terminal de communication (TC).

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1 à 6, lorsqu'il est exécuté par un processeur.

## Patentansprüche

1. Verfahren zum Verarbeiten von Transaktionsdaten, Verfahren, das durch ein Kommunikationsendgerät (TC) umgesetzt wird, das über einen Touchscreen (Tac) verfügt, Verfahren des Typs, umfassend ein Eingeben während einer Transaktion auf dem Touchscreen (Tac) des Kommunikationsendgeräts (TC) einer Dateneinheit zur Personenidentifizierung (DIP) eines Benutzers, wobei das Verfahren auf Ebene des Kommunikationsendgeräts (TC) einen Schritt des Erfassens (10) einer Eingabenotwendigkeit einer Dateneinheit zur Personenidentifizierung (DIP) aufweist, wobei das Verfahren **dadurch gekennzeichnet ist, dass** es ferner aufweist:
- einen Schritt des Übertragens (20) an einen Kartenleser (LecC), der mit dem Kommunikationsendgerät (TC) verbunden ist, einer Anfrage (RqP) zur Übernahme des Anzeigens einer virtuellen Tastatur (VK), wobei die Anfrage (RqP) eine Dateneinheit aufweist, die für einen Übergang des Kommunikationsendgeräts von einem sogenannten "Master"-Betriebsmodus zu einem sogenannten "Slave"-Betriebsmodus repräsentativ ist, wobei dieser zweite Betriebsmodus das Umsetzen des Verfahrens zum Verarbeiten von Transaktionsdaten unter der ausschließlichen Kontrolle des Kartenlesers konditioniert;
- einen Schritt des Eingebens (30) der Dateneinheit zur Personenidentifizierung (DIP) auf der virtuellen Tastatur (VK) durch den Benutzer;
- einen Schritt des Empfangens (40) von Seiten des Kartenlesers (LecC) der Dateneinheit zur Personenidentifizierung (DIP).

2. Verfahren zum Verarbeiten nach Anspruch 1, **dadurch gekennzeichnet, dass** es auf Ebene des Kartenlesers (LecC) aufweist:
- einen Schritt des Empfangens (A10) von dem Kommunikationsendgerät (TC) der Anfrage (RqP) zur Übernahme des Anzeigens einer virtuellen Tastatur (VK) ;
- einen Schritt des Erzeugens (A20) der virtuellen Tastatur (VK), die auf dem Touchscreen (Tac) des Kommunikationsendgeräts (TC) anzuzeigen ist;
- einen Schritt des Erhaltens (A30) der Dateneinheit zur Personenidentifizierung (DIP) mit Hilfe der virtuellen Tastatur (VK); und
- einen Schritt des Übertragens (A40) der Dateneinheit zur Personenidentifizierung (DIP) an das Kommunikationsendgerät (TC).

3. Verfahren zum Verarbeiten nach Anspruch 1, **dadurch gekennzeichnet, dass** die Dateneinheit zur Personenidentifizierung (DIP), die während des Schritts des Empfangens empfangen wird, unter Verwendung eines Verschlüsselungsschlüssels des Kartenlesers (LecC) verschlüsselt wird.

4. Verfahren zum Verarbeiten nach Anspruch 1, **dadurch gekennzeichnet, dass** es einen Schritt des Übertragens der Dateneinheit zur Personenidentifizierung (DIP) an einen Transaktionsverwaltungsserver aufweist, mit dem das Kommunikationsendgerät verbunden ist.

5. Verfahren nach Anspruch 2, **dadurch gekennzeichnet, dass** der Schritt des Erzeugens (A20) der virtuellen Tastatur (VK), die auf dem Touchscreen (Tac) anzuzeigen ist, das Erhalten mindestens einer Zufalls-oder Pseudozufallszahl aufweist und dadurch, dass der Ort der Tasten der virtuellen Tastatur in Abhängigkeit von der mindestens einen Zufalls- oder Pseudozufallszahl bestimmt wird.

6. Verfahren nach Anspruch 1, **dadurch gekennzeichnet, dass** der Kartenleser einem Standard für die Verarbeitung von Daten über Zahlungstransaktionen erfüllt.

7. Kommunikationsendgerät, umfassend Mittel zum Verarbeiten von Transaktionsdaten, Kommunikationsendgerät (TC), das über einen Touchscreen (Tac) verfügt, Endgerät, umfassend Mittel zum Eingeben auf dem Touchscreen (Tac) einer Dateneinheit zur Personenidentifizierung (DIP) eines Benutzers, wobei das Endgerät Mittel zum Erfassen einer Eingabenotwendigkeit einer Dateneinheit zur Personenidentifizierung (DIP) aufweist, wobei das Endgerät **dadurch gekennzeichnet ist, dass** es ferner aufweist:
- Mittel zum Übertragen an einen Kartenleser (LecC), der mit dem Kommunikationsendgerät (TC) verbunden ist, einer Anfrage (RqP) zur Übernahme des Anzeigens einer virtuellen Tastatur (VK), wobei die Anfrage (RqP) eine Dateneinheit aufweist, die für einen Übergang des Kommunikationsendgeräts von einem sogenannten "Master"-Betriebsmodus zu einem sogenannten "Slave"-Betriebsmodus repräsentativ ist;
- Mittel zum Eingeben der Dateneinheit zur Personenidentifizierung (DIP) auf der virtuellen Tastatur (VK) durch den Benutzer,
- Mittel zum Empfangen von Seiten des Kartenlesers (LecC) der Dateneinheit zur Personenidentifizierung (DIP).

8. Kartenleser (LecC), umfassend Mittel zum Verarbeiten von Transaktionsdaten, ferner umfassend Mittel zur Kommunikation mit einem Kommunikationsendgerät (TC), an das der Kartenleser während der Verarbeitung einer Transaktion angeschlossen werden kann, wobei der Kartenleser **dadurch gekennzeichnet ist, dass** er aufweist:
- Mittel zum Empfangen von dem Kommunikationsendgerät (TC) einer Anfrage (RqP) zur Übernahme des Anzeigens einer virtuellen Tastatur (VK), wobei die Anfrage (RqP) eine Dateneinheit aufweist, die für einen Übergang des Kommunikationsendgeräts von einem sogenannten "Master"-Betriebsmodus zu einem sogenannten "Slave"-Betriebsmodus repräsentativ ist;
- Mittel zum Erzeugen der virtuellen Tastatur (VK), die auf dem Touchscreen (Tac) des Kommunikationsendgeräts (TC) anzuzeigen ist;
- Mittel zum Erhalten einer Dateneinheit zur Personenidentifizierung (DIP) mit Hilfe der virtuellen Tastatur (VK); und
- Mittel zum Übertragen der Dateneinheit zur Personenidentifizierung (DIP) an das Kommunikationsendgerät (TC).

9. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen zum Ausführen eines Verfahrens zum Verarbeiten nach Anspruch 1 bis 6 aufweist, wenn es von einem Prozessor ausgeführt wird.

## Claims

1. Method for processing transaction data, the method being implemented by means of a communications terminal (TC) having a touchscreen (Tac), method of the type comprising an entry, during a transaction, on said touchscreen (Tac) of said communications terminal (TC), of a piece of personal data of a user, the method comprising, in the communications terminal (TC), a step for detecting (10) a necessity of entering a piece of personal identification data (DIP), said method being **characterized in that** it further comprises:
- a step of transmission (20), to a card reader (LecC) connected to the communications terminal (TC), of a request (RqP) for supporting the display of a virtual keypad (VK), said request (RqP) comprising a piece of data representing a passage of said communications terminal from a mode of operation called a "master" mode to a mode of operation called a "slave" mode, said second mode of operation leading to the implementation of said method for processing transaction data under the exclusive control of the card reader;
- a step of entry (30), by said user on said virtual keypad (VK), of the piece of personal identification data (DIP);
- a step of reception (40), from the card reader (LecC), of said piece of personal identification data (DIP).

2. Method for processing according to claim 1, **characterized in that** it comprises, in said card reader (LecC):
- a step of reception (A10), from the communications terminal (TC), of the request (RqP) for supporting the display of a virtual keypad (VK);
- a step for generating (A10) the virtual keypad (VK) to be displayed on said touchscreen (Tac) of said communications terminal (TC);
- a step for obtaining (A30) the piece of personal identification data (DIP) by means of said virtual keypad (VK); and
- a step of transmission (A40) of the piece of personal identification data (DIP) to the communications terminal (TCC).

3. Method for processing according to claim 1, **characterized in that** said piece of personal identification data (DIP) received during said step of reception is encrypted by means of an encryption key of the card reader (LecC).

4. Method for processing according to claim 1, **characterized in that** it comprises a step of transmission of the piece of personal identification data (DIP) to a transaction management server to which the communications terminal is connected.

5. Method according to claim 2, **characterized in that** said step for generating (A20) the virtual keypad (VK) to be displayed on said touchscreen (Tac) comprises the obtaining of at least one random number or pseudo-random number and **characterized in that** the location of the keys of said virtual keypad is determined as a function of at least one random number or pseudo-random number.

6. Method according to claim 1, **characterized in that** the card reader complies with a payment transaction data-processing standard.

7. Communications terminal comprising means for processing transaction data, the communications terminal (TC) having a touchscreen (Tac), the terminal comprising means of entry, on said touchscreen (Tac), of a piece of personal identification data (DIP) of a user, said terminal comprising means for detecting a necessity of entering a piece of personal identification data (DIP), said terminal being **characterized in that** it further comprises:
- means of transmission, to a card reader (LecC) connected to the communications terminal (TC), of a request (RqP) for supporting the display of a virtual keypad (VK), comprising a piece of data representing a passage of said communications terminal from a mode of operation called a "master" mode to a mode of operation called a "slave" mode;
- means of entry, by said user on said virtual keypad (VK), of the piece of personal identification data (DIP);
- means of reception, from the card reader (LrcC), of said piece of personal identification data (DIP).

8. Card reader (LecC) comprising means for processing transaction data, further comprising means of communication with a communications terminal (TC) with which said card reader is liable to be connected during the processing of a transaction, said card reader being **characterized in that** it comprises:
- means of reception, from the communications terminal (TC), of a request (RqP) for supporting the display of a virtual keypad, said request (RqP) comprising a piece of data representing a passage of said communications terminal from a mode of operation called a "master" mode to a mode of operation called a "slave" mode;
- means for generating the virtual keypad t(VK) to be displayed on a touchscreen (Tac) of said communications terminal (TC);
- means for obtaining a piece of personal identification data (DIP) by means of said virtual keypad (VK); and
- means of transmission of the piece of personal identification data (DIP) to the communications terminal (TC).

9. Computer program product downloadable from a communications network and/or stored on a computer-readable medium and/or executable by a microprocessor **characterized in that** it comprises program code instructions for the execution of a method of processing according to claims 1 to 6, when it is executed by a processor.
